(19)

Europäisches
Patentamt
European
Patent Office
Office européen
des brevets

(11) **EP 3 252 382 A1**

(12) **EUROPEAN PATENT APPLICATION**

(43) Date of publication:
06.12.2017 Bulletin 2017/49

(21) Application number: 16172086.7

(22) Date of filing: 31.05.2016

(51) Int Cl.:
*F24D 3/08* (2006.01)     *F24D 3/18* (2006.01)
*F24D 19/10* (2006.01)     *G05D 23/19* (2006.01)
*G06Q 10/06* (2012.01)     *G06Q 50/06* (2012.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicants:
• DAIKIN INDUSTRIES, LIMITED
Osaka-shi
Osaka 530 (JP)

• Daikin Europe N.V.
8400 Oostende (BE)

(72) Inventors:
• CHIKAMI, Hideo
8400 Oostende (BE)
• VANSTEENKISTE, Wim
8400 Oostende (BE)

(74) Representative: **Global IP Europe**
**Patentanwaltskanzlei**
**Pfarrstraße 14**
**80538 München (DE)**

(54) **APPARATUS FOR SPACE HEATING AND WARM WATER SUPPLY**

(57) An apparatus (100) configured to be connected to a space heating unit (200) and a water supply unit (300) with a water tank (310) so as to form a space heating circuit (250) and a water supply circuit (350) in which a heating medium is supplied to the space heating unit (200) and the water supply unit (300), respectively. The apparatus comprises a heat pump unit (20) and a boiler unit (30) configured to heat the heating medium, an ambient temperature sensor (50), a return medium temperature sensor (60) configured to detect a temperature of water in the water tank (310), an operation mode means (92) configured to switch an operation mode of the apparatus between a space heating mode and a water supply mode by controlling a three-way switching valve (40), and a heat source control means (94) configured to switch between the heat pump unit (20) and the boiler unit (30) a heat source to be operated during the water supply mode based on the ambient temperature detected and the temperature of the water in the water tank (310) detected.

[FIG.4]

EP 3 252 382 A1

**Description**

**Field of the invention**

The invention relates to an apparatus for space heating and warm water supply, specifically an apparatus for space heating and warm water supply having a heat pump unit and a boiler unit as heat sources.

**Background**

Such an apparatus is known from EP 2 463 591 A1. In this apparatus, a heat pump unit and a boiler unit are used as heat sources for space heating. Only the boiler unit is used as a heat source for warm water supply.
Although the apparatus above improves efficiency in space heating by using the heat pump unit and the boiler unit properly, the efficiency in warm water supply remains the same as a conventional apparatus having a boiler as a heat source.
It is the object of the present invention to provide an apparatus for space heating and warm water supply having a heat pump unit and a boiler unit as heat sources and having high efficiency of the apparatus in both of space heating and warm water supply.

**Summary**

A first aspect of the present invention provides an apparatus configured to be connected to a space heating unit and a water supply unit with a water tank so as to form a space heating circuit and a water supply circuit in which a heating medium is supplied to the space heating unit and the water supply unit, respectively. The apparatus is provided with a heat pump unit, a boiler unit, a circuit switching means, a first detecting means, a second detecting means, an operation mode means and a heat source control means. The heat pump unit is configured to heat the heating medium. The boiler unit is configured to heat the heating medium. The circuit switching means is configured to switch a flow circuit of the heating medium between the space heating circuit and the water supply circuit. The first detecting means is configured to detect an ambient temperature around the heat pump unit. The second detecting means is configured to detect a temperature of water in the water tank. The operation mode means is configured to switch an operation mode of the apparatus between a space heating mode and a water supply mode by controlling the circuit switching means such that the space heating circuit is activated during the space heating mode and the water supply circuit is activated during the water supply mode. The heat source control means is configured to switch between the heat pump unit and the boiler unit a heat source to be operated during the water supply mode based on the ambient temperature detected and the temperature of the water in the water tank detected.
With the above configuration, the heat pump unit can be utilized for water supply if the heat pump unit is applicable in view of the ambient temperature around the heat pump unit and the temperature of the water in the water tank. In other words, it is possible to secure opportunity to utilize the heat pump unit as the heat source for the water supply under a certain condition at which the heat pump unit can operate. Since a heat pump unit has generally better energy efficiency than a boiler, the use of the heat pump instead of the boiler improves energy efficiency of the apparatus in the entire performance of water supply and space heating.
According to a preferred embodiment of the apparatus mentioned above, the heat source control means is configured to switch between the heat pump unit and the boiler unit a heat source to be operated during the water supply mode based on information indicating energy efficiency of the heat pump unit and the boiler unit.
With this preferred embodiment of the invention, it is possible to selectively operate a heat source having more energy efficiency in accordance with the dynamic changes in the environment in a secure manner.
A coefficient of performance can be used as an indicator of the energy efficiency of the heat pump unit and the boiler unit. The coefficient of performance is defined as a value calculated by dividing the amount of heat energy outputted from the heat pump unit or the boiler unit to the heating medium by the amount of energy inputted to the heat pump unit or the boiler unit. The information indicating energy efficiency such as coefficient of performance is preferably stored on a data storage unit of the apparatus in advance in a form of a table or a function.
According to another preferred embodiment of the apparatus having the heat source control means configured to switch the heat source to be operated during the water supply mode based on information indicating energy efficiency of the heat pump unit and the boiler unit mentioned above, the apparatus is further provided with a calculation means. The calculation means is configured to calculate from the ambient temperature around the heat pump unit the coefficient of performance of the heat pump unit as the information indicating energy efficiency of the heat pump.
With this preferred embodiment of the invention, the coefficient of performance of the heat pump is dynamically calculated in accordance with the change of the ambient temperature. Therefore it is possible to select a heat source to be operated during the water supply mode which is more energy efficient in a more precise manner.

According to another preferred embodiment of the apparatus having the calculation means mentioned above, the calculation means is configured to calculate further from the temperature of the water in the water tank the coefficient of performance of the heat pump unit as the information indicating energy efficiency of the heat pump.

With this preferred embodiment of the invention, it is possible to obtain more accurate coefficient of performance of the heat pump in accordance with the change of the water temperature in the tank. Therefore it is possible to select the heat source to be operated during the water supply mode in a more precise manner.

According to another preferred embodiment of the any one of apparatuses mentioned above, the apparatus is further provided with an acquiring means. The acquiring means is configured to acquire information indicating an electricity price and a fuel price. The heat pump unit is driven by electricity. The boiler unit is driven by fuel. The heat source control means is configured to switch between the heat pump unit and the boiler unit a heat source to be operated during the water supply mode based on the information acquired.

With this preferred embodiment of the invention, it is possible to improve not only energy efficiency of the apparatus but the economic efficiency. Thereby the economic burden of the user of the apparatus can be reduced.

The electricity price and the fuel price are defined as a value calculated by dividing the price of energy by the amount of energy. For example, the electricity price and the fuel price are expressed as a price per kilo joule. The information indicating the electricity price and the fuel price may include the ratio of the electricity price to the fuel price.

The acquiring means is preferably configured to acquire the information indicating the actual price over network such as the Internet. In addition or alternatively, the acquiring means may acquire the information from a table storing the prices of electricity and fuel.

According to another preferred embodiment of the any one of apparatuses mentioned above, the second detecting means is arranged at a location on or in a pipe in which the heating medium is to flow, on the upstream side of both of the heat pump unit and the boiler unit, and on the downstream side of both of the space heating unit and the water supply unit with respect to a flow direction of the heating medium.

With this preferred embodiment of the invention, it is possible to acquire the temperature of water in the water tank even when there is a temperature distribution in the water stored in the water tank. The second detecting means arranged in the above location avoids difficulties to obtain the accurate temperature of the water in the water tank by arranging sensors at different locations in the water tank.

According to another alternative preferred embodiment, the second detecting means is arranged on or in the water tank.

With this preferred embodiment of the invention, a more efficient heat source can be selected in an accurate manner based on the relatively accurate temperature of water in the water tank.

When operating mode is switched from the space heating mode to the water supply mode, the heating medium accumulated in the water supply circuit starts circulating therein. When the heating medium has been stagnated therein for a long time and is already cooled down, the temperature of the circulating heating medium may be considerably different from that of the water in the water tank. Therefore, if the temperature of the heating medium is used as the temperature of water in the water tank, the heat source might be switched improperly. In addition, the heat source might be switched again after a short time of period during which the heating medium starts circulating with an improper heat source in the water supply circuit.

More preferably, a plurality of the second detecting means is arranged both at a first location and a second location. The first location is on or in a pipe in which the heating medium is to flow, on the upstream side of both of the heat pump unit and the boiler unit, and on the downstream side of both of the space heating unit and the water supply unit with respect to a flow direction of the heating medium. The second location is on or in the water tank. The temperature detected by the second detecting means on or in the water tank is used when the apparatus starts operating the water supply mode. By using both of the second detecting means, the apparatus can enjoy both merits caused by the second detecting means arranged at the first location and the second detecting means arranged at the second location.

According to another preferred embodiment of the any one of apparatuses mentioned above, the heat source control means is configured to operate the heat pump unit, the boiler unit, or both of the heat pump unit and the boiler unit as at least one heat source to be operated during the space heating mode.

With this preferred embodiment of the invention, the efficiency of space heating operation can be improved by properly determining the heat pump unit, the boiler unit, or both of the heat pump unit and the boiler unit as the heat source/sources for space heating.

When both of the heat pump unit and the boiler unit are used during the space heating operation, the heating medium is heated with the heat pump unit to a certain temperature. Then, the heating medium, heated by the heat pump, is further heated by the boiler unit to a target temperature.

During the space heating operation, there is a case that high efficiency can be achieved by using both of the heat pump unit and the boiler unit. For example, after the heating medium has passed through the space heating unit, the temperature of the heating medium heated by the boiler unit can significantly drop to a temperature at which the heat pump unit is operable at a high efficiency. In such a case, the heat pump unit is preferably used to pre-heat up the heating medium and then the boiler unit is used to heat it up to the target temperature for space heating.

According to another preferred embodiment of the any one of apparatuses mentioned above, the heat source control means is configured to switch the heat source to be operated during the water supply mode at at least a predetermined interval of time period.

With this preferred embodiment of the invention, it is possible to avoid that the heat source to be operated is frequently changed and the efficiency of the apparatus is thereby deteriorated.

**BRIEF DESCRIPTION OF THE DRAWINGS**

FIG.1 is a schematic diagram of a space heating and water supply system including an apparatus for space heating and warm water supply according to an embodiment of the present invention.

FIG.2 is a block diagram of the apparatus for space heating and warm water supply according to FIG.1.

FIG.3a is a diagram for conceptually explaining the fundamental selection of a heat source to be operated during a water supply mode between a heat pump unit and a boiler unit in the apparatus for space heating and warm water supply according to FIG.1.

FIG.3b is a diagram for conceptually explaining the preferable selection of a heat source to be operated during the water supply mode between the heat pump unit and the boiler unit in the apparatus for space heating and warm water supply according to FIG.1.

FIG.4 is a flow chart schematically representing a method for switching a heat source to be operated during the water supply mode between the heat pump unit and the boiler unit in the apparatus for space heating and warm water supply according to FIG.1.

**Detailed Description of Preferred Embodiments**

Preferred embodiments of the apparatus for space heating and warm water supply according to the present invention will be described with reference to the drawings.

It should be understood that the detailed explanation are provided merely for the purpose of explanation, and are in no way to be construed as limiting of the present invention. While the present invention will be described with reference to exemplary preferred embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention will be described herein with reference to preferred structures, materials and embodiments, the present invention is not intended to be limited to the particulars disclosed herein; rather, the present invention extends to all configurations within the scope of the appended claims.

1. Space Heating and Water Supply System

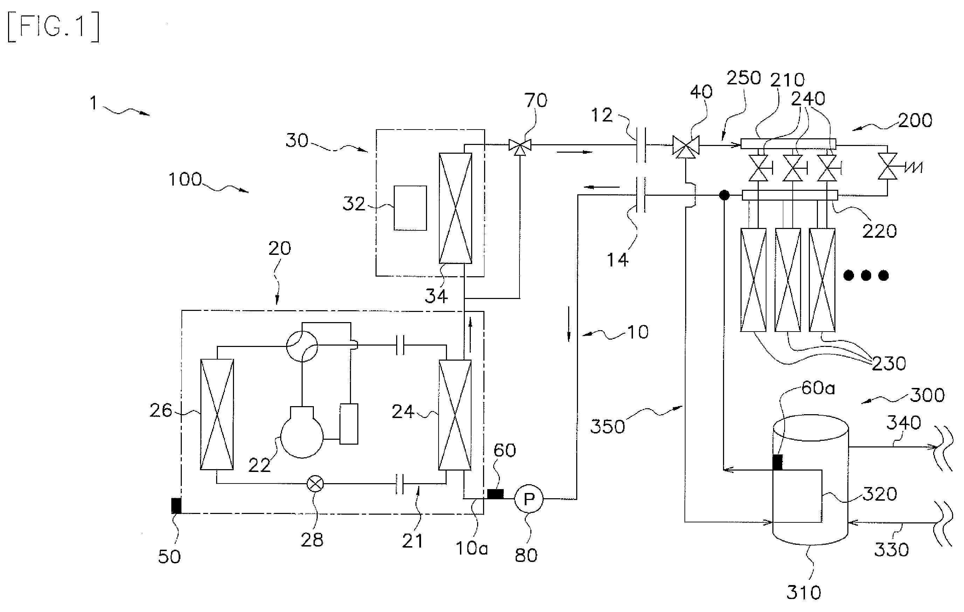

FIG.1 shows a schematic diagram of a space heating and water supply system 1 including the apparatus 100 as an embodiment of the apparatus for space heating and warm water supply according to the present invention.

For example, the space heating and water supply system 1 is used for space heating and warm water supply in a residential building. However, the space heating and water supply system 1 may be used in another type of building. The space heating and water supply system 1 includes the apparatus 100, a space heating unit 200, and a water supply unit 300.

The apparatus 100 heats a heating medium which is used for space heating and heating domestic water. The apparatus 100 has a heat pump unit 20 and a boiler unit 30 as heat sources to heat the heating medium as shown in FIG.1. For example, the heating medium is an aqueous medium. The type of heating medium is given here by way of example, and not by way of limitation. The apparatus 100 can supply the heating medium heated by at least one of the heat source to the space heating unit 200 and the water supply unit 300. The apparatus 100 can receive the heating medium returned from the space heating unit 200 or the water supply unit 300. The apparatus 100 has an outlet 12 of the heating medium through which the heating medium flows out toward the space heating unit 200 or the water supply unit 300. The apparatus 100 has an inlet 14 of the heating medium through which the heating medium retuned from the space heating unit 200 or the water supply unit 300 flows in. The configuration of the apparatus 100 will be explained in detail later.

The space heating unit 200 includes at least one heat emitter 230 such as a radiator. In FIG.1 the space heating unit 200 includes a plurality of heat emitters 230. The type of the heat emitter 230 is not limited to the radiator. The heat emitter 230 may be a floor heating or a convector. Each of the heat emitters 230 is located in a space to be heated. The space heating unit 200 further includes an inlet header 210, an outlet header 220, and at least one valve 240. The inlet header 210 is connected to the outlet 12 of the apparatus 100 by piping. The outlet header 220 is connected to the inlet 14 of the apparatus 100 by piping. Each of the heat emitters 230 is connected to both of the inlet header 210 and the outlet header 220 by piping. The piping is configured such that the heating medium can flow in the heat emitters 230 from the inlet header 210 to the outlet header 220 through the piping. In order to control a flow of the heating medium through the heat emitters 230, a valve 240 is arranged on the piping between the inlet header 210 and each of the heat emitters 230 or on the piping between each of the heat emitters 230 and the outlet header 220. The space heating unit 200 further includes at least one thermostat (not shown) with a temperature sensor (not shown) for measuring the temperature in the space to be heated by the space heating unit 200. A user of the space heating unit 200 may set a target room temperature to the thermostat. The thermostat sends a signal to the apparatus 100 for requesting an operation of the apparatus 100 in a space heating mode based on the user's command and the temperature detected by the temperature sensor. The thermostat controls the operation of the valve 240 based on the target room temperature and the temperature detected by the temperature sensor.

The apparatus 100 is connected to a space heating unit 200 so as to form a space heating circuit 250 in which the heating medium is circulated. Specifically, the outlet 12 of the heating medium of the apparatus 100 is connected to the inlet header 210 of the space heating unit 200 by piping and the inlet 14 of the heating medium of the apparatus 100 is connected to the outlet header 220 of the space heating unit 200 by piping. Thereby, the space heating circuit 250 is formed. When the apparatus 100 is operated in the space heating mode during which the space heating circuit 250 is activated and the heat pump unit 20 and/or the boiler unit 30 is operated, the heating medium heated with the heat pump unit 20 and/or the boiler unit 30 is supplied to the space heating unit 200 in the space heating circuit 250. The space heating circuit 250 is configured such that the heating medium having been used for space heating at the space heating unit 200 returns to the apparatus 100 in the space heating circuit 250 after having radiated its heat at the heat emitter 230.

The water supply unit 300 includes a water tank 310 and a heat exchange part 320. An inlet pipe 330 of the domestic water and an outlet pipe 340 of the domestic water are connected to the water tank 310. Domestic water is supplied to the water tank 310 through the inlet pipe 330 of the domestic water. Domestic water is stored in the water tank 310. The heat exchange part 320 is arranged in the water tank 310. The heat exchange part 320 has an inlet and an outlet of the heating medium. The inlet of the heat exchange part 320 is connected to outlet 12 of the heating medium of the apparatus 100 by piping. The outlet of the heat exchange part 320 is connected to inlet 14 of the heating medium of the apparatus 100 by piping. Domestic water in the water tank 310 is heated with the heating medium flowing in the heat exchange part 320. Heated domestic water flows out from the water tank 310 through the outlet pipe 340 of the domestic water. The water supply unit 300 further includes a controller (not shown) with a temperature sensor (not shown) for measuring the temperature of the water in the water tank 310. A user of the water supply unit 300 may set a target water temperature to the controller. The controller sends a signal to the apparatus 100 for requesting an operation of the apparatus 100 in a water supply mode based on the target water temperature and the temperature detected by the temperature sensor.

The apparatus 100 is connected to a water supply unit 300 having a water tank 310 so as to form a water supply circuit 350 in which the heating medium circulates. Specifically, the outlet 12 of the heating medium of the apparatus 100 is connected to the inlet of the heat exchange part 320 by piping. The inlet 14 of the heating medium of the apparatus 100 is connected to the outlet of the heat exchange part 320 by piping. Thereby, the water supply circuit 350 is formed. When the apparatus 100 is operated in the water supply mode during which the water supply circuit 350 is activated and the heat pump unit 20 or the boiler unit 30 is operated, the heating medium heated with the heat pump unit 20 or the boiler unit 30 is supplied to the water supply unit 300 in the water supply circuit 350. The water supply circuit 350 is configured such that the heating medium having been used for heating domestic water at the water supply unit 300 returns to the apparatus 100 in the water supply circuit 350 after having radiated its heat at the heat exchange part 320.

2. Configuration of the Apparatus for Space Heating and Water Supply

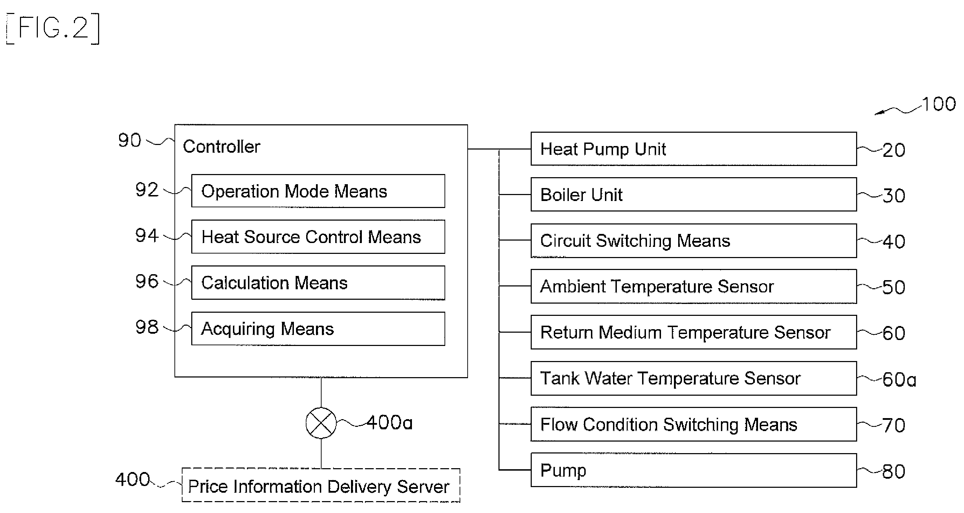

As shown in FIG.1, the apparatus 100 for space heating and water supply is mainly provided by piping 10, the heat pump unit 20, the boiler unit 30, a circuit switching means 40, an ambient temperature sensor 50, a return medium temperature sensor 60, a tank water temperature sensor 60a, a flow mode switching means 70, and a pump 80. As shown in FIG.2, the apparatus 100 is further provided with a controller 90.

The piping 10 constitutes a part of the space heating circuit 250 and the water supply circuit 350. The piping 10 connects the inlet 14 of the heating medium, the pump 80, a first heat exchanger 24 of the heat pump unit 20, a heat exchanger 34 of the boiler unit 30, and the outlet 12 of the heating medium. Thereby, the heating medium flows as follows. The heating medium flowing into the inlet 14 of the heating medium is sucked into the pump 80 through the piping 10. The pump 80 delivers the heating medium toward the first heat exchanger 24 of the heat pump unit 20 through the piping 10. The heating medium passing through the first heat exchanger 24 of the heat pump unit 20 flows through the piping 10 toward the outlet 12 of the heating medium via the heat exchanger 34 of the boiler unit 30 or directly. The heating medium then flows out from the outlet 12 of the heating medium toward the space heating unit 200 or the water supply unit 300.

The heat pump unit 20 is configured to heat the heating medium flowing in the space heating circuit 250 or the water supply circuit 350. The heat pump unit 20 is driven by electricity. The heat pump unit 20 includes a conventional refrigerant circuit 21 in which a refrigerant circulates a compressor 22, the first heat exchanger 24, an expansion mechanism 28 and a second heat exchanger 26. The refrigerant is, for example, R-410A or another HFC-based refrigerant. The type of refrigerant is given here by way of example, and not by way of limitation. The compressor 22 is a mechanism to compress the refrigerant. A motor (not shown) of the compressor 22 may be driven at variable frequency so that the heat pump unit 20 may be driven under full load but also under a partial load. For example, the frequency of the motor of the compressor 22 may be decided based on the ambient temperature around the heat pump unit 20 detected by the ambient temperature sensor 50. Alternatively, the motor (not shown) of the compressor 22 may be driven at constant frequency, although it is preferable that motor of the compressor 22 is driven at variable frequency. In the first heat exchanger 24, the heating medium circulating in the space heating circuit 250 or in the water supply circuit 350 exchanges heat with the refrigerant circulating in the refrigerant circuit 21. In a heating operation with the heat pump unit 20 where the heating medium passing through the first heat exchanger 24 is heated, the first heat exchanger 24 functions as a condenser of the refrigerant. In the second heat exchanger 26, the refrigerant circulating in the refrigerant circuit 21 exchanges heat with ambient air. In the heating operation, the second heat exchanger 26 functions as an evaporator of the refrigerant. The expansion mechanism 28 is an electric expansion valve which depressurizes refrigerant flowing into the second heat exchanger 26.

The boiler unit 30 is configured to heat the heating medium flowing in the space heating circuit 250 or the water supply circuit 350. The boiler unit 30 is driven by fuel. The boiler unit 30 is preferably a conventional gas fired condensing boiler. The boiler unit 30 includes a burner 32 and the heat exchanger 34. The heat generated by the burner 32 is transferred to the heating medium at the heat exchanger 34.

The circuit switching means 40 is configured to switch a flow circuit of the heating medium between the space heating circuit 250 and the water supply circuit 350. The circuit switching means 40 selectively connects the outlet 12 of the heating medium of the apparatus 100 to the inlet header 210 of the space heating unit 200 or the inlet of the heat exchange part 320 of the water supply unit 300. Alternatively, the circuit switching means 40 may be arranged on the piping between the inlet 14 of the heating medium of the apparatus 100 and the outlet header 220 of the space heating unit 200 and between the inlet 14 of the heating medium of the apparatus 100 and the outlet of the heat exchange part 320 of the water supply unit 300. In this case, the outlet 12 of the heating medium of the apparatus 100 may be connected to the inlet header 210 of the space heating unit 200 and the inlet of the heat exchange part 320 of the water supply unit 300 by piping. The circuit switching means 40 is, for example, an electric or solenoid three-way valve arranged on the piping as shown in FIG.1. However, the circuit switching means 40 may be configured by a plurality of electric or solenoid valves arranged on the piping.

The ambient temperature sensor 50 is configured to detect an ambient temperature around the heat pump unit 20. The ambient temperature sensor 50 is arranged, for example, on a casing (not shown) of the heat pump unit 20 disposed outside or a machine room.

The return medium temperature sensor 60 is configured to detect a temperature of the heating medium which has returned to the apparatus 100 after circulating in the space heating unit 200 or the water supply unit 300. The return medium temperature sensor 60 is arranged on or in a pipe 10a which constitutes a part of the piping 10. The return medium temperature sensor 60 is arranged at a location on the upstream side of both of the heat pump unit 20 and the boiler unit 30, and on the downstream side of both of the space heating unit 200 and the water supply unit 300 with respect to a flow direction of the heating medium. The return medium temperature sensor 60 is arranged at a location on or in the piping 10 between the inlet 14 of the heating medium and the first heat exchanger 24 of the heat pump unit 20. Preferably, the return medium temperature sensor 60 is located immediately before the first heat exchanger 24 with respect to the flow direction of the heating medium.

When the apparatus 100 is operated in the water supply mode, the temperature detected by the return medium temperature sensor 60 is used as the temperature of water in the water tank 310 of the water supply unit 300 in a steady state. The steady state means that the apparatus 100 has been operated in the water supply mode continuously for a sufficient time (e.g. a few minutes). By using the temperature detected by the return medium temperature sensor 60 as the temperature of the water in the water tank 310, it is possible to acquire the temperature of water in the water tank 310 even when there is a temperature distribution in the water stored in the water tank 310.

The tank water temperature sensor 60a is configured to detect a temperature of the water in the water tank 310 of the water supply unit 300. The tank water temperature sensor 60a is arranged in or on the water tank 310 of the water supply unit 300 as shown in FIG.1.

The flow mode switching means 70 is configured to switch a flow mode of the heating medium between a boiler usage mode and a boiler bypass mode. In the boiler usage mode, the heating medium circulating the space heating circuit 250 or the water supply circuit 350 flows though the heat exchanger 34 of the boiler unit 30. In the boiler bypass mode, the heating medium circulating the space heating circuit 250 or the water supply circuit 350 bypasses, i.e. does not flow though, the heat exchanger 34 of the boiler unit 30. When the boiler unit 30 is operated as the heat source to heat the heating medium, the flow mode switching means 70 sets the flow mode of the heating medium at the boiler usage mode. The flow mode switching means 70 is, for example, an electric or solenoid three-way valve arranged on the piping 10. As shown in FIG.1, the flow mode switching means 70 selectively connects the outlet of the heat exchanger 24 or the outlet of the heat exchanger 34 to the outlet 12 of the apparatus 100. The flow mode switching means 70 may be configured by a plurality of electric or solenoid valves arranged on the piping 10.

The pump 80 is arranged on the piping 10 to circulate the heating medium in the space heating circuit 250 or the water supply circuit 350. In the FIG.1, the pump 80 is arranged on the upstream side of both of the heat pump unit 20 and the boiler unit 30 with respect to a flow direction of the heating medium. However, the pump 80 may be arranged on the downstream side of both of the heat pump unit 20 and the boiler unit 30 with respect to a flow direction of the heating medium.

The controller 90 controls the operation of the apparatus 100. The controller 90 includes a microcomputer and a memory (not shown). The microcomputer executes programs stored in the memory, whereby the controller 90 controls the operation of the components of the apparatus 100 based on the signals received from the space heating unit 200 and the water supply unit 300 and the detection results from the sensors including the ambient temperature sensor 50, the return medium temperature sensor 60, and the tank water temperature sensor 60a.

The controller 90 is electrically connected to the heat pump unit 20, the boiler unit 30, the circuit switching means 40, the ambient temperature sensor 50, the return medium temperature sensor 60, the tank water temperature sensor 60a, the flow mode switching means 70, the pump 80 as shown in FIG.2. The controller 90 is also electrically connected with the thermostat of the space heating unit 200 and the controller of the water supply unit 300 to exchange signals. The controller 90 is preferably electrically connected to price information delivery server 400 via a network 400a such as an internet. The price information delivery server 400 delivers the electricity price and the fuel price. The electricity price and the fuel price are defined as a value calculated by dividing the price of energy by the amount of energy. For example, the electricity price and the fuel price are expressed as a price per kilo joule. The information indicating the electricity price and the fuel price may include the ratio of the electricity price to the fuel price. For example, the price information delivery server 400 is a server operated by an energy supplier.

The controller 90 includes an operation mode means 92, a heat source control means 94, a calculation means 96, and an acquiring means 98 as function sections as shown in FIG.2.

The operation mode means 92 is configured to switch the operation mode of the apparatus 100 between the space heating mode and the water supply mode by controlling the circuit switching means 40. When the operation mode means 92 switches the operation mode of the apparatus 100 to the space heating mode, the circuit switching means 40 is controlled to connect the outlet 12 of the heating medium of the apparatus 100 to the inlet header 210. Thereby, the heating medium circulates in the space heating circuit 250. When the operation mode means 92 switches the operation mode of the apparatus 100 to the water supply mode, the circuit switching means 40 is controlled to connect the outlet 12 of the heating medium of the apparatus 100 to the inlet of the heat exchange part 320. Thereby, the heating medium circulates in the water supply circuit 350. The operation mode to which the operation mode means 92 switches is determined based on the signals sent from the space heating unit 200 and/or the water supply unit 300.

The heat source control means 94 determines a heat source/heat sources to be operated and operates the heat pump unit 20 and/or the boiler unit 30 which is determined as a heat source/heat sources to be operated.

During the water supply mode, either the heat pump unit 20 or the boiler unit 30 is selectively operated.

During the water supply mode, the heat source control means 94 is configured to switch between the heat pump unit 20 and the boiler unit 30 a heat source to be operated based on the ambient temperature detected by the ambient temperature sensor 50 and the temperature of the water in the water tank 310 detected. The temperature detected by the return medium temperature sensor 60 is used as the temperature of the water in the water tank 310. Alternatively, the temperature detected by the tank water temperature sensor 60a may be used as the temperature of the water in the water tank 310. Preferably, the temperature detected by the tank water temperature sensor 60a is used after a predetermined time (e.g. a few minute) from the start of the operation of the apparatus 100 in the water supply mode.

Preferably, the heat source control means 94 is configured to switch between the heat pump unit 20 and the boiler unit 30 the heat source to be operated during the water supply mode further based on information indicating energy efficiency of the heat pump unit 20 and the boiler unit 30. Preferably, the coefficient of performance (COP) of the heat pump unit 20 calculated by the calculation means 96 is used as the information indicating energy efficiency of the heat pump.

More preferably, the heat source control means 94 is configured to switch between the heat pump unit 20 and the boiler unit 30 a heat source to be operated during the water supply mode based on the information indicating the electricity price and the fuel price acquired by the acquiring means 98. Specifically, the heat source control means 94 may be configured to switch between the heat pump unit 20 and the boiler unit 30 a heat source to be operated during the water supply mode based on the comparison result between COP of the heat pump unit 20 and a break-even coefficient of performance (BECOP). The BECOP is calculated by the calculation means 96 using the information indicating the electricity price and the fuel price acquired by the acquiring means 98.

It will be explained in detail later how the heat source control means 94 switches a heat source to be operated between the heat pump unit 20 and the boiler unit 30 during the water supply mode.

During the space heating mode, the heat source control means 94 is configured to determine the heat pump unit 20, the boiler unit 30, or both of the heat pump unit 20 and the boiler unit 30 as at least one heat source to be operated. For example, the heat source control means 94 is configured to determine at least one heat source to be operated during the space heating mode based on the ambient temperature detected and the target room temperature as disclosed in EP 2 463 591 A1. That is to say, the heat source control means 94 is configured to determine at least one heat source to be operated during the space heating mode as follows.

Firstly, the user sets a target room temperature via the thermostat of the space heating unit 200. An ambient temperature around the heat pump unit 20 is detected by the ambient temperature sensor 50. Preferably, the calculation means 96 calculates the coefficient of performance of the heat pump unit 20 at a set flow temperature ($COP_{\text{set Flow Temperature}}$) from the ambient temperature around the heat pump unit 20 and the set flow temperature. The flow temperature is a temperature of the heating medium which flows into the inlet header 210 of the heat pump unit 20. The set flow temperature is a flow temperature required to obtain the target room temperature set by the user.

The heat source control means 94 determines the heat pump unit 20 as a heat source to be operated during the space heating mode when the $COP_{\text{Set Flow Temperature}}$ is higher than the BECOP and the heat pump unit 20 can heat up the temperature of the heating medium up to the set flow temperature.

The heat source control means 94 determines the heat pump unit 20 and the boiler unit 30 as heat sources to be operated during the space heating mode when satisfying one of the following conditions.

1) $COP_{\text{Set Flow Temperature}}$ is higher than the BECOP, but the heat pump unit 20 can not heat up the temperature of the heating medium up to the set flow temperature.
2) $COP_{\text{Set Flow Temperature}}$ is equal to or lower than the BECOP, but it is possible to set an intermediate flow temperature at which the coefficient of performance of the heat pump unit 20 ($COP_{\text{Intermediate Flow Temperature}}$) is higher than the BECOP. The calculation means 96 calculate the $COP_{\text{Intermediate Flow Temperature}}$ from the ambient temperature around the heat pump unit 20 and the set flow temperature as with the $COP_{\text{Set Flow Temperature}}$.

The heat source control means 94 determines the boiler unit 30 as a heat source to be operated during the space heating mode when $COP_{\text{Set Flow Temperature}}$ is equal to or lower than the BECOP and it is not possible to set the intermediate flow temperature at which $COP_{\text{Intermediate Flow Temperature}}$ is higher than the BECOP.

The calculation means 96 is configured to calculate from the ambient temperature around the heat pump unit 20 detected by the ambient temperature sensor 50 the coefficient of performance (COP) of the heat pump unit 20. The calculated COP of the heat pump unit 20 is used as the information indicating energy efficiency of the heat pump unit 20 by the heat source control means 94 during the water supply mode. For example, the calculation means 96 calculates COP of the heat pump unit 20 with a prepared function using the ambient temperature around the heat pump unit 20 as a variable. The calculation means 96 may calculate COP of the heat pump unit 20 using a table, stored in the memory, which associates COPs of the heat pump unit 20 with the ambient temperatures around the heat pump unit 20.

Preferably, the calculation means 96 is configured to calculate further from the temperature of the water in the water tank 310 the coefficient of performance (COP) of the heat pump unit 20. The temperature detected by the return medium temperature sensor 60 is used as the temperature of the water in the water tank 310. Alternatively, the temperature detected by the tank water temperature sensor 60a may be used as the temperature of the water in the water tank 310. Preferably, the temperature detected by the tank water temperature sensor 60a may be used after a predetermined time (e.g. a few minute) from the start of operation of the apparatus 100 in the water supply mode. For example, the calculation means 96 calculates COP of the heat pump unit 20 with a prepared function using the ambient temperature around the heat pump unit 20 and the temperature of the water in the water tank 310 as variables. The calculation means 96 may calculate COP of the heat pump unit 20 using a table stored in the memory. The table stores COPs of the heat pump unit 20 and combinations of the ambient temperature around the heat pump unit 20 and the temperature of the water in the water tank 310 in association with each other.

The calculation means 96 is further configured to calculate the break-even coefficient of performance (BECOP) from the information indicating the electricity price and the fuel price acquired by the acquiring means 98 and a boiler efficiency of the boiler unit 30. For example, the boiler efficiency of the boiler unit 30 is stored in the memory (not shown) of the controller 90. BECOP is calculated with a following equation.

BECOP = Electricity Price [price per kilo joule] / Fuel Price [price per kilo joule] * Boiler Efficiency

Preferably, the calculation means 96 is further configured to calculate the coefficient of performance of the heat pump unit 20 at a set flow temperature (COP $_{Set\ Flow\ Temperature}$) from the ambient temperature around the heat pump unit 20 and the set flow temperature as explained above. For example, the calculation means 96 calculates COP $_{Set\ Flow\ Temperature}$ with functions prepared for each of the set flow temperatures using the ambient temperature around the heat pump unit 20. The calculation means 96 may calculate COP $_{Set\ Flow\ Temperature}$ using tables prepared for each of the set flow temperatures and stored in the memory. The tables store COPs $_{Set\ Flow\ Temperature}$ and the ambient temperature around the heat pump unit 20 in association with each other. For example, the heat source control means 94 is configured to operate the heat pump unit 20, the boiler unit 30, or both of the heat pump unit 20 and the boiler unit 30 as at least one heat source to be operated during the space heating mode based on COP $_{Set\ Flow\ Temperature}$ and BECOP as explained above.

The acquiring means 98 is configured to acquire information indicating the electricity price and the fuel price delivered from the price information delivery server 400 via network 400a. In this embodiment, the acquiring means 98 is configured to acquire the information indicating the actual price over network 400a. However, in another embodiment, the acquiring means may be a table storing the prices of electricity and fuel.

3. Operation of the Heat Source Control Means of the Apparatus for Space Heating and Water Supply

In this section, it will be mainly explained how a heat source to be operated is switched by the heat source control means 94 during the water supply mode.

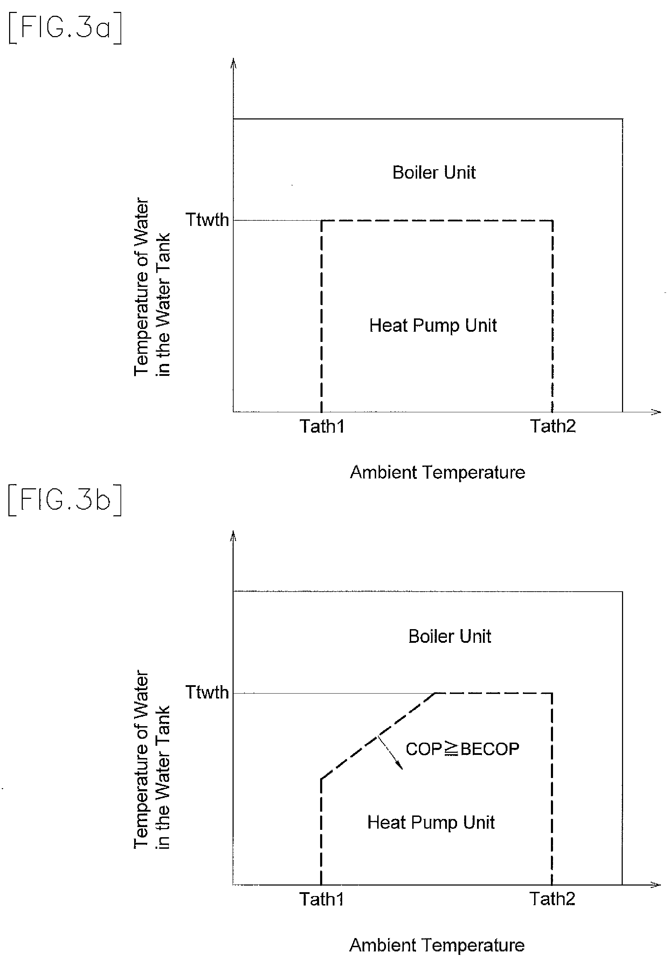

Firstly, it will be explained how a heat source to be operated is determined during water supply mode with reference to a diagram of FIG.3a and 3b.

FIGs.3a and 3b show diagrams for conceptually explaining the selection of a heat source to be operated during the water supply mode between the heat pump unit 20 and the boiler unit 30. FIG.3a show a diagram for the fundamental selection and FIG.3b show a diagram for the preferable selection.

In FIGs.3a and 3b, in the case the ambient temperature around the heat pump unit 20 and the temperature of the water in the water tank 310 fall within the area enclosed by the dot line, the heat pump unit 20 is selected to be operated in that condition. In the other case the ambient temperature around the heat pump unit 20 and the temperature of the water in the water tank 310 fall outside of the area enclosed by the dot line, the boiler unit 30 is selected to be operated in that condition.

During water supply mode, the heat source to be operated is selected between the heat pump unit 20 and the boiler unit 30 based on two conditions a) and b) mentioned below.

a) Ambient temperature around the heat pump unit is between a lower threshold Tath 1 and an upper threshold Tath 2

When the heating medium circulating in the space heating circuit 250 or the water supply circuit 350 is heated with the heat pump unit 20, the refrigerant circulating in the refrigerant circuit 21 exchanges heat with ambient air and evaporates at the second heat exchanger 26. If the temperature of the ambient air is too low, it becomes difficult to obtain an enough heat for evaporating the refrigerant and to operate the heat pump unit 20 properly. Also, if the temperature of the ambient air is too high, the temperature of the refrigerant discharged from the compressor 22 rises too much and thereby it becomes difficult to operate the heat pump unit 20 properly. Therefore, the heat pump unit 20 is preferably operated in an ambient temperature range between Tath 1 (lower threshold) and Tath 2 (upper threshold) as shown in FIG.3a.

b) Target temperature of water in the water tank is under an upper threshold Ttwth

The heat pump unit 20 can heat up the temperature of the water in the water tank 310 up to a certain temperature (Ttwth). However, if it is required to heat the water in the water tank 310 further, the boiler unit 30 needs to be used as the heat source instead of the heat pump unit 20. Therefore, the heat pump unit 20 is operated when the temperature of the water in the water tank 310 is lower than Ttwth (upper threshold) as shown in FIG.3a.

The conditions a) and b) can be illustrated as shown in FIG.3a. When the ambient temperature around the heat pump unit 20 and the temperature of the water in the water tank 310 fall within the area enclosed by the dot line, the heat pump unit 20 is selected to be operated in that condition. The area enclosed by the dot line is defined such that the ambient temperature is between the lower threshold Tath1 and the upper threshold Tath2 and the temperature of the water in the water tank 310 is below the upper threshold Ttwth.

When the ambient temperature around the heat pump unit 20 and the temperature of water in the water tank 310 meet the above conditions a) and b), it is possible to operate the heat pump unit. However, from the perspective of efficiency, there is still room for improvement. Therefore, preferably, the heat source to be operated is selected between the heat pump unit 20 and the boiler unit 30 during water supply mode based on additional condition c) mentioned below.

c) COP of the heat pump unit

Generally speaking, when the ambient temperature around the heat pump unit 20 is relatively low and the temperature of the water in the water tank 310 is relatively high, it becomes difficult to operate the heat pump unit 20 more efficiently than the boiler unit 30. Therefore, even if the ambient temperature around the heat pump unit 20 and the temperature of water in the water tank 310 meet the above conditions a) and b), it is preferable to operate the boiler unit 30 instead of the heat pump unit 20 when the ambient temperature around the heat pump unit 20 and the temperature of the water in the water tank 310 fall out of the area enclosed by the dot line shown in FIG.3b. When the heat pump unit 20 is operated in the range corresponding to the inside the area enclosed by the dot line in FIG.3b, the heat pump unit 20 shows a COP higher than the BECOP. In other words, the heat pump unit 20 can be operated more cost efficiently than the boiler unit 30. The area enclosed by the dot line is defined such that the ambient temperature is between the lower threshold Tath1 and the upper threshold Tath2, the temperature of the water in the water tank 310 is below the upper threshold Ttwth, and the COP is higher than the BECOP.

It is noted that the shape of the area enclosed by the dot line in FIG.3b is given here by way of explanation, and not by way of limitation. Although the area suitable for operation of the heat pump unit 20 is enclosed by the straight lines in FIG.3b, but a part of the lines may be curve lines instead of the straight lines.

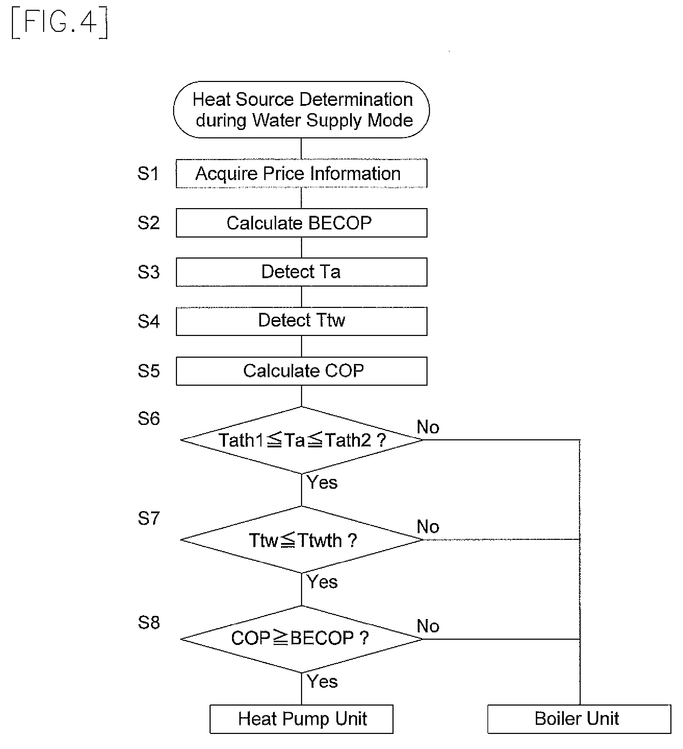

Now, it will be explained a method for switching a heat source to be operated during the water supply mode between the heat pump unit 20 and the boiler unit 30 with a flow chart of FIG.4.

At step S1, the acquiring means 98 acquires information indicating the electricity price and the fuel price from the price information delivery server 400 via the network 400a. The step S1 may be executed when the price information delivery server 400 sends the information indicating the electricity price and the fuel price.

At step S2, the calculation means 96 calculates BECOP from the information indicating the electricity price and the fuel price acquired by the acquiring means 98 and the boiler efficiency of the boiler unit 30 stored in the memory (not shown) of the controller 90. The step S2 may be executed when the information indicating the electricity price and the fuel price is changed. For example, the step S2 may be executed when the acquiring means 98 acquires information indicating the electricity price and the fuel price from the price information delivery server 400. If the information indicates different prices in accordance with time periods in a day, the step S2 may be executed when a time period starts.

At step S3, the ambient temperature sensor 50 detects the ambient temperature around the heat pump unit 20.

At step S4, the return medium temperature sensor 60 detects the temperature of the heating medium. Alternatively, the tank water temperature sensor 60a may detect the temperature of the water in the water tank 310.

At step S5, the calculation means 96 calculates the COP of the heat pump unit 20 from the ambient temperature around the heat pump unit 20. Preferably, the calculation means 96 calculates the COP of the heat pump unit 20 from the ambient temperature around the heat pump unit 20 and the temperature of the water in the water tank 310. The temperature detected by the return medium temperature sensor 60 or the tank water temperature sensor 60a is used as the water temperature to calculate the COP.

The COP of the heat pump unit 20 may be calculated from the current ambient temperature around the heat pump unit 20, and preferably further from the current temperature of the water in the water tank 310. More preferably, the COP of the heat pump unit 20 may be calculated from the average ambient temperature around the heat pump unit 20 during a predetermined period and the average temperature of the water in the water tank 310 during the predetermined period. When the average ambient temperature around the heat pump unit 20 and the average temperature of the water in the water tank 310 are used for calculating the COP of the heat pump unit 20, steps S3, S4 are executed a plurality of times in the predetermined period before executing step S5.

At step S6, the heat source control means 94 compares the ambient temperature (Ta) around the heat pump unit 20 with a lower threshold value (Tath1) and an upper threshold value (Tath2) of the ambient temperature. Preferably, the average ambient temperature (Ta) during the predetermined period is compared with the lower threshold value (Tath1) and the upper threshold value (Tath2). When the average ambient temperature around the heat pump unit 20 is used for comparison, step S3 is executed a plurality of times in the predetermined period before executing step S6. When the ambient temperature (Ta) is equal or higher than the lower threshold value (Tath1) and is equal or lower than the upper threshold value (Tath2), the flow proceeds to step S7. When the ambient temperature (Ta) is lower than the lower threshold value (Tath1) or is higher than the upper threshold value (Tath2), the heat source control means 94 sets the boiler unit 30 as a heat source to be operated.

At step S7, the heat source control means 94 compares the temperature of the water (Ttw) in the water tank 310 with an upper threshold value (Ttwth). Preferably, the average temperature (Ttw) of the water in the water tank 310 during the predetermined period is compared with the upper threshold value (Ttwth). When the average temperature of the water in the water tank 310 is used for comparison, step S4 is executed a plurality of times in the predetermined period before executing step S6. When the temperature of the water (Ttw) is equal or lower than the upper threshold value (Ttwth), the flow proceeds to step S8. When the temperature of the water (Ttw) is higher than the upper threshold value (Ttwth), the heat source control means 94 sets the boiler unit 30 as a heat source to be operated.

At step S7, the heat source control means 94 compares the COP of the heat pump unit 20 calculated in step S5 with BECOP. When the COP of the heat pump unit 20 is equal or higher than BECOP, the heat source control means 94 sets the heat pump unit 20 as a heat source to be operated. When the COP of the heat pump unit 20 is lower than BECOP, the heat source control means 94 sets the boiler unit 30 as a heat source to be operated.

Steps S3 to S8 may be executed repeatedly during operation of the apparatus 100 in the water supply mode. Preferably, steps S3 to S8 are executed at a predetermined interval of time period (e.g. every five minutes).

When the heat source control means 94 sets the heat pump unit 20 as a heat source to be operated, heat source control means 94 operates the heat pump unit 20 and sets the flow mode of the heating medium to the bypass mode by controlling the flow mode switching means 70.

When the heat source control means 94 sets the boiler unit 30 as a heat source to be operated, heat source control means 94 operates the boiler unit 30 and sets the flow mode of the heating medium to the boiler usage mode by controlling the flow mode switching means 70.

The method for switching a heat source to be operated during the water supply mode between the heat pump unit 20 and the boiler unit 30 is not limited to the above explanation, and various variations and modifications may be possible.

For example, the above mentioned order of the steps may be altered without departing from the purpose of the method explained above.

Although the method explained above takes the efficiency into consideration as explained in FIG.3b, it is possible to alter the method so as not to take the efficiency into consideration as explained in FIG.3a by skipping step S1, S2, S5, and S8 in FIG. 4.

4. Variations

Variations of the above mentioned embodiments will be described below. Some or all of the variations can be combined except they are not contrary to each other.

(1) In the above embodiment, BECOP is calculated by the calculation means 96 using the equation below.

$$\text{BECOP} = \text{Electricity Price [price per kilo joule]} / \text{Fuel Price [price per kilo joule]} * \text{Boiler Efficiency}$$

However, BECOP may be calculated using the following equation if it is required to place higher importance on the ecological viewpoint than the economical viewpoint.

$$\text{BECOP} = \text{Primary Energy Factor} * \text{Boiler Efficiency}$$

Primary energy factor is defined as the ratio between end-user consumption of electricity and primary energy consumption.

**Claims**

1. An apparatus (100) configured to be connected to a space heating unit (200) and a water supply unit (300) with a water tank (310) so as to form a space heating circuit (250) and a water supply circuit (350) in which a heating medium is supplied to the space heating unit (200) and the water supply unit (300), respectively, comprising:

  a heat pump unit (20) configured to heat the heating medium;
  a boiler unit (30) configured to heat the heating medium;

a circuit switching means (40) configured to switch a flow circuit of the heating medium between the space heating circuit (250) and the water supply circuit (350);

a first detecting means (50) configured to detect an ambient temperature around the heat pump unit (20);

a second detecting means (60, 60a) configured to detect a temperature of water in the water tank (310);

an operation mode means (92) configured to switch an operation mode of the apparatus between a space heating mode and a water supply mode by controlling the circuit switching means (40) such that the space heating circuit (250) is activated during the space heating mode and the water supply circuit (350) is activated during the water supply mode; and

a heat source control means (94) configured to switch between the heat pump unit (20) and the boiler unit (30) a heat source to be operated during the water supply mode based on the ambient temperature detected and the temperature of the water in the water tank (310) detected.

2. The apparatus (100) according to claim 1, wherein
the heat source control means (94) is configured to switch between the heat pump unit (20) and the boiler unit (30) a heat source to be operated during the water supply mode based on information indicating energy efficiency of the heat pump unit (20) and the boiler unit (30).

3. The apparatus (100) according to claim 2, further comprising
a calculation means (96) configured to calculate from the ambient temperature around the heat pump unit (20) the coefficient of performance of the heat pump unit (20) as the information indicating energy efficiency of the heat pump.

4. The apparatus (100) according to claim 3, wherein
the calculation means (96) configured to calculate further from the temperature of the water in the water tank (310) the coefficient of performance of the heat pump unit (20) as the information indicating energy efficiency of the heat pump.

5. The apparatus (100) according to any one of claims 1 to 4, further comprising
an acquiring means (98) configured to acquire information indicating an electricity price and a fuel price, wherein
the heat pump unit (20) is driven by electricity,
the boiler unit (30) is driven by fuel, and
the heat source control means (94) is configured to switch between the heat pump unit (20) and the boiler unit (30) a heat source to be operated during the water supply mode based on the information acquired.

6. The apparatus (100) according to any one of claims 1 to 5, wherein
the second detecting means (60) is arranged at a location

on or in a pipe (10a) in which the heating medium is to flow,
on the upstream side of both of the heat pump unit (20) and the boiler unit (30), and
on the downstream side of both of the space heating unit (200) and the water supply unit (300) with respect to a flow direction of the heating medium.

7. The apparatus (100) according to any one of claims 1 to 5, wherein
the second detecting means (60a) is arranged on or in the water tank.

8. The apparatus (100) according to any one of claims 1 to 7, wherein
the heat source control means (94) is configured to operate the heat pump unit (20), the boiler unit (30), or both of the heat pump unit (20) and the boiler unit (30) as at least one heat source to be operated during the space heating mode.

9. The apparatus (100) according to any one of claims 1 to 8, wherein
the heat source control means (94) is configured to switch the heat source to be operated during the water supply mode at at least a predetermined interval of time period.

[FIG.1]

[FIG.2]

Controller ~90

Operation Mode Means ~92

Heat Source Control Means ~94

Calculation Means ~96

Acquiring Means ~98

Price Information Delivery Server ~400

400a

Heat Pump Unit ~20

Boiler Unit ~30

Circuit Switching Means ~40

Ambient Temperature Sensor ~50

Return Medium Temperature Sensor ~60

Tank Water Temperature Sensor ~60a

Flow Condition Switching Means ~70

Pump ~80

100

EP 3 252 382 A1

[FIG.3a]

[FIG.3b]

[FIG.4]

```
           ╭─────────────────────────────╮
           │  Heat Source Determination  │
           │   during Water Supply Mode  │
           ╰─────────────────────────────╯
                          │
   S1    ┌─────────────────────────────────┐
         │    Acquire Price Information     │
         └─────────────────────────────────┘
                          │
   S2    ┌─────────────────────────────────┐
         │        Calculate BECOP           │
         └─────────────────────────────────┘
                          │
   S3    ┌─────────────────────────────────┐
         │           Detect Ta              │
         └─────────────────────────────────┘
                          │
   S4    ┌─────────────────────────────────┐
         │           Detect Ttw             │
         └─────────────────────────────────┘
                          │
   S5    ┌─────────────────────────────────┐
         │         Calculate COP            │
         └─────────────────────────────────┘
                          │
   S6              ◇─────────────◇        No
           ◁ Tath1≦Ta≦Tath2 ? ▷───────────────────┐
                   ◇─────────────◇                 │
                          │ Yes                     │
                                                    │
   S7              ◇─────────────◇        No       │
            ◁    Ttw≦Ttwth ?    ▷──────────────────┤
                   ◇─────────────◇                 │
                          │ Yes                     │
                                                    │
   S8              ◇─────────────◇        No       │
            ◁   COP≧BECOP ?     ▷──────────────────┤
                   ◇─────────────◇                 │
                          │ Yes                     │
              ┌────────────────────┐    ┌────────────────────┐
              │   Heat Pump Unit   │    │    Boiler Unit     │
              └────────────────────┘    └────────────────────┘
```

Europäisches
Patentamt

European
Patent Office

Office européen
des brevets

# EUROPEAN SEARCH REPORT

Application Number

EP 16 17 2086

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 159 495 A1 (HONEYWELL TECHNOLOGIES SARL [CH]) 3 March 2010 (2010-03-03)<br>* paragraphs [0007] - [0015], [0018]; figures 1,2,4 *<br>----- | 1-9 | INV.<br>F24D3/08<br>F24D3/18<br>F24D19/10<br>G05D23/19<br>G06Q10/06<br>G06Q50/06 |
| X | JP 2009 275957 A (DENSO CORP) 26 November 2009 (2009-11-26)<br>* paragraphs [0009], [0010], [0041] - [0043], [0081] - [0083]; figure 9 *<br>----- | 1-9 | |
| X | EP 3 006 857 A1 (TOSHIBA CARRIER CORP [JP]) 13 April 2016 (2016-04-13)<br>* paragraphs [0007], [0013]; claim 1; figures 1,3 *<br>----- | 1,7-9 | |

TECHNICAL FIELDS
SEARCHED (IPC)

F24D
G05D
G06Q
G05B

The present search report has been drawn up for all claims

| Place of search | Date of completion of the search | Examiner |
|---|---|---|
| Munich | 4 November 2016 | Degen, Marcello |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 252 382 A1**

## ANNEX TO THE EUROPEAN SEARCH REPORT
## ON EUROPEAN PATENT APPLICATION NO.

EP 16 17 2086

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2016

| Patent document cited in search report | | Publication date | Patent family member(s) | | Publication date |
|---|---|---|---|---|---|
| EP 2159495 | A1 | 03-03-2010 | NONE | | |
| JP 2009275957 | A | 26-11-2009 | JP | 5206106 B2 | 12-06-2013 |
| | | | JP | 2009275957 A | 26-11-2009 |
| EP 3006857 | A1 | 13-04-2016 | EP | 3006857 A1 | 13-04-2016 |
| | | | JP | 2016075455 A | 12-05-2016 |

EPO FORM P0459

For more details about this annex : see Official Journal of the European Patent Office, No. 12/82

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2463591 A1